# EUROPEAN PATENT APPLICATION

(11) **EP 4 645 049 A1**
(43) Date of publication of application: **05.11.2025**
(21) Application number: 23910096.9
(22) Date of filing: 12.12.2023
(51) Int. Cl.: G06F 3/04845

(54) **SPECIAL EFFECT PROCESSING METHOD AND APPARATUS, ELECTRONIC DEVICE, AND STORAGE MEDIUM**

(30) Priority: 29.12.2022 CN 202211718373
(71) Applicant: Beijing Zitiao Network Technology Co., Ltd., Beijing 100190 (CN)
(72) Inventor: SHEN, Siyu, Beijing 100028 (CN); WEN, Haoqi, Beijing 100028 (CN); LIU, Shu, Beijing 100028 (CN); GONG, Zijian, Beijing 100028 (CN); LIU, Gao, Beijing 100028 (CN); ZHANG, Yeqi, Beijing 100028 (CN); LIAO, Siran, Beijing 100028 (CN)
(74) Representative: Marks & Clerk LLP
(86) International application number: PCT/CN2023/138132
(87) International publication number: WO 2024/140166

(57) **Abstract**

Provided in embodiments of the present disclosure are a special effect processing method and apparatus, an electronic device, and a storage medium. The special effect processing method comprises: receiving a special effect adding operation for an image to be processed, and displaying a special effect classification interface, the special effect classification interface displaying a special effect type option, and the special effect type option comprising a special effect template option; receiving a selection operation acting on the special effect template option, and adding into said image a special effect element corresponding to the selected special effect template option; and receiving an element editing operation for the added special effect element in said image, and, on the basis of the element editing operation, adjusting display information of the special effect element. According to the technical solution of the embodiments of the present disclosure, it is possible to quickly add a preset special effect element combination by selecting a special effect template, support the reuse of special effects, and support the adjustment of a single special effect element in the special effect template, thus special effect processing is more flexible, the personalized requirements of a user can be better met, and the special effect processing experience of a user is improved.

## Description

The present application claims priority to the Chinese patent application No. 202211718373.3 filed on December 29, 2022, the disclosure of which is incorporated herein by reference in its entirety as part of the present application.

### TECHNICAL FIELD

Embodiments of the present disclosure relate to an effect processing method and apparatus, an electronic device, and a storage medium.

### BACKGROUND

In short video or image applications, users are usually provided with a wide variety of effect props. An increasingly growing number of short video users have diversified the display effect of their short videos or images by adding various effects into these short videos or images.

Effect props are generally made by professional effect prop makers, and the display mode of such effect props is generally unchanged and also unmodifiable to users, leading to a relatively rigid effect. In addition, there will be a limited number of the types of effect props if they are made by professional effect prop makers, so users' personalized needs cannot be well satisfied.

### SUMMARY

The embodiments of the present disclosure provide an effect processing method and apparatus, electronic device and storage medium, to achieve flexible editing of effects.

The embodiments of the present disclosure provide an effect processing method, comprising:
receiving an effect adding operation for a to-be-processed image, and displaying an effect classification interface, wherein the effect classification interface displays an effect type option, and the effect type option comprise an effect template option;
receiving a selection operation acting on the effect template option, and adding an effect element corresponding to the selected effect template option into the to-be-processed image; and
receiving an element editing operation for the effect element added into the to-be-processed image, and adjusting display information of the effect element based on the element editing operation.

The embodiments of the present disclosure further provide an effect processing apparatus, comprising:
an effect classification displaying module configured to receive an effect adding operation for a to-be-processed image, and display an effect classification interface, wherein the effect classification interface displays an effect type option, and the effect type option comprises an effect template option;
an effect template adding module configured to receive a selection operation acting on the effect template option, and add an effect element corresponding to the selected effect template option into the to-be-processed image; and
an effect element adjusting module configured to receive an element editing operation for the effect element added into the to-be-processed image, and adjust display information of the effect element based on the element editing operation.

The embodiments of the present disclosure further provide an electronic device, comprising:
one or more processors; and
a memory configured to store one or more programs,
wherein, when the one or more programs are executed by the one or more processors, the one or more processors implement the effect processing method according to any of the embodiments of the present disclosure.

The embodiments of the present disclosure further provide a storage medium containing computer-executable instructions, the computer-executable instructions, when executed by a computer processor, being used to execute the effect processing method according to any of embodiments of the present disclosure.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1A is a schematic flowchart of an effect processing method according to the embodiment of the present disclosure;
Fig. 1B is a schematic diagram illustrating an effect classification interface for the effect processing method according to the embodiment of the present disclosure;
Fig. 1C is a schematic diagram illustrating an interface, including an effect adding control, for the effect processing method according to the embodiment of the present disclosure;
Fig. 1D is a schematic diagram illustrating a graphics drawing panel for the effect processing method according to the embodiment of the present disclosure;
Fig. 2 is a schematic flowchart of another effect processing method according to the embodiment of the present disclosure;
Fig. 3 is a schematic flowchart of yet another effect processing method according to the embodiment of the present disclosure;
Fig. 4 is a structural schematic diagram of an effect processing apparatus according to the embodiment of the present disclosure; and
Fig. 5 is a structural schematic diagram of an electronic device according to the embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that otherwise explicitly stated in the context, it should be understood as "one or more".

The names of messages or information exchanged between a plurality of apparatuses in the embodiments of the present disclosure are used for illustrative purposes only, and are not indicated to limit the scope of these messages or information.

It may be understood that before using the technical solutions disclosed in the embodiments of the present disclosure, the types, scope of use, and usage scenarios of personal information involved in the present disclosure and the like shall be informed to the user and the user's authorization shall be obtained in an appropriate manner in accordance with relevant laws and regulations.

For example, when receiving an active request from a user, a prompt message is sent to the user to explicitly prompt the user that an operation requested by the user will need to obtain and use the user's personal information. In this way, the user can choose whether to provide personal information to a software or hardware such as an electronic device, an application, a server, or a storage medium that performs the operation of the technical solution of the present disclosure according to the prompt message.

As an optional but non-limiting implementation, in response to receiving an active request from a user, the prompt message may be sent to the user in the form of a pop-up window, and the prompt message may be presented in the pop-up window in the form of text. In addition, the pop-up window may also carry a selection control for the user to select "agree" or "disagree" to provide personal information to the electronic device.

It may be understood that the above process of notifying and obtaining user authorization is only schematic, and does not limit the implementation of the present disclosure. Other manners that meet relevant laws and regulations may also be applied to the implementation of the present disclosure.

It may also be understood that the data (including but not limited to the data itself, data acquisition, or use) involved in the technical solutions of the present disclosure shall comply with the requirements of the corresponding laws, regulations, and related provisions.

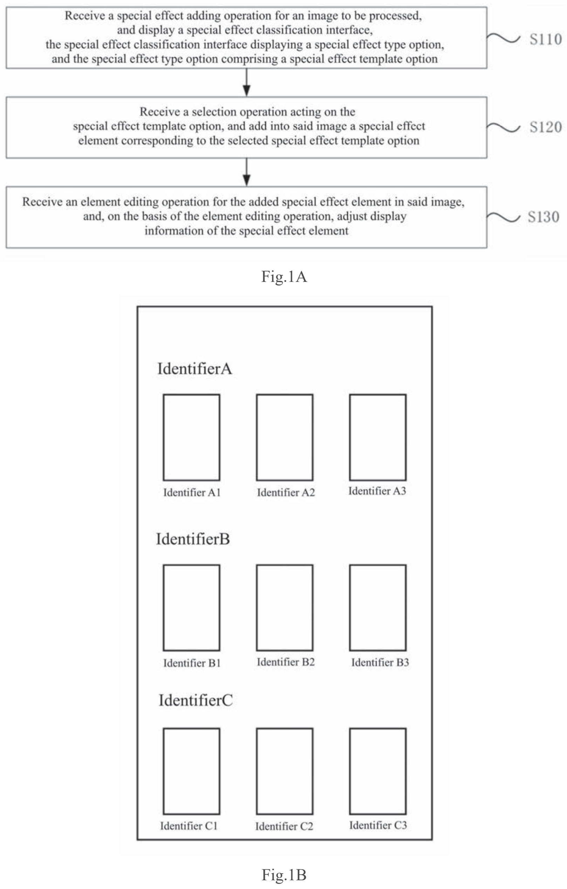

Fig. 1A is a schematic flowchart of an effect processing method according to the embodiment of the present disclosure. The embodiments of the present disclosure are applicable to scenarios where personalized effect props are made on mobile terminals. The method may be executed by the effect processing apparatus that may be implemented in software and/or hardware, or alternatively implemented by an electronic device. This electronic device may be a mobile terminal, a PC terminal, or a server, etc.

Specifically, as shown in Fig. 1A, the method in this embodiment may comprise:
S110: receiving an effect adding operation for a to-be-processed image, and displaying an effect classification interface, wherein the effect classification interface displays effect type options, and the effect type options comprise effect template options.

In this step, the to-be-processed image may be understood as an image into which effect elements are added. Alternatively, the to-be-processed image may be a captured image, and may also be a sample image that is preset for displaying the result of effect application. The effect adding operation may be understood as a selection operation for selecting effect types that are to be added into the to-be-processed image. The options may be understood as function controls that can be selected and/or deselected. The effect type options may be used to indicate various types of effects for selection by users. Alternatively, the effect type options may be shown in the form of one or a combination of numbers, characters, graphics, and images. As shown in Fig. 1B, the effect classification interface may be used to display one or more types of the effect type options. Each type of the effect type options may also have category identifiers.

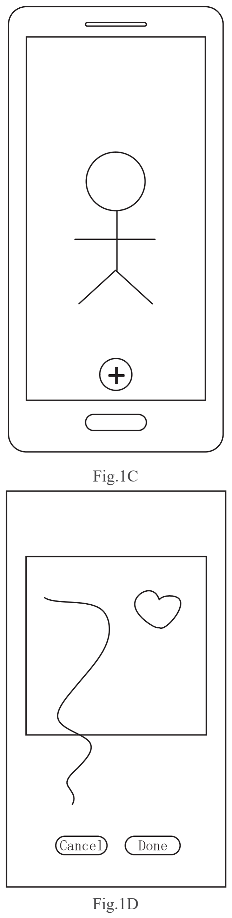

Alternatively, receiving an effect adding operation for a to-be-processed image and displaying an effect classification interface comprises: receiving a control triggering operation acting on a preset effect adding control, and displaying the effect classification interface, wherein the effect adding control may be arranged at an edge area of an image display interface for the to-be-processed image, e.g., a lower area of the image display interface. It can be appreciated that the effect adding control may be shown in multiple forms, e.g., may be identified by characters, pictures, or symbols. Exemplarily, as shown in Fig. 1C, the effect adding control is specifically identified by "+", "Add", or " 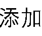 " (the Chinese version of "Add"), etc.

In the embodiment of the present disclosure, the effect type options comprise effect template options, wherein the effect template options may be understood as options used to indicate different effect templates. The effect template option and the effect template may have a mutual relationship of one-on-one correspondence. In a case where the effect classification interface displays a plurality of effect type options, each effect type option may be displayed by category. Exemplarily, a plurality of effect template options may be displayed in the category of template type. In a case where the quantity of the effect template options exceeds a first quantity such that the plurality of effect template options cannot be displayed simultaneously, a second quantity of the effect template options may be displayed based on generation time, frequency of use, template name, user-input reranking operation or preset displaying sequence of the effect type options, wherein the second quantity is smaller than or equal to the first quantity. Further, the effect type options displayed may be switched in response to sliding operations in preset directions.

Alternatively, the effect type options may further comprise effect element options, wherein the effect element option may be understood as an option for indicating a particular type of effect elements, and one effect element option may correspond to one or more effect elements.

Alternatively, the effect classification interface may display a plurality of effect element options therein, and each effect element option may be used to indicate different types of effect elements. Exemplarily, the effect element options comprise at least one selected from the group of a filter option, a makeup option, a hair dying option, an area segmentation option, a deformation option for a first preset object, an option for associated display following a second preset object, a foreground sticker option, and a background image option.

Among these options, the deformation option for the first preset object comprises at least one selected from the group of facial deformation, body deformation, and stretching of limbs. The option for associated display following the second preset object may be an option indicative of effect elements that occur following the occurrence of facial angles, facial organs or hands, and may also be an option indicative of effect elements that occur following the occurrence of preset actions. The foreground sticker option may be understood as an option for indicating effect elements that can be hung in the foreground area of an image. The background image option may be understood as an option for indicating effect elements that can be hung in the background area of an image.

Alternatively, the effect processing method according to the embodiment of the present disclosure further comprises: receiving a selection operation for the effect element options, and displaying at least one of the effect elements corresponding to the effect element options; and receiving a selection operation for the effect element, and adding the selected effect element into the to-be-processed image.

Specifically, in response to the selection operation for the effect element options, one or more effect elements corresponding to the effect element option may be displayed by upwardly unfolding an effect element detail panel from screen bottom or by jumping to an effect element detail page. Further, a separate selection operation for one effect element or a batch selection operation for a plurality of effect elements is received, and the one or more selected effect elements are added into the to-be-processed image.

S120: receiving a selection operation acting on the effect template options, and adding an effect element corresponding to the selected effect template option into the to-be-processed image.

As previously described, in the embodiment of the present disclosure, one of the effect template options may correspond to one effect template. One effect template may correspond to one or more effect elements. In a case where one effect template may correspond to a plurality of effect elements, the plurality of effect elements may be of the same or different type. The display mode for one or more effect elements may be set in the effect template.

Specifically, a clicking operation (such as single-click or double-click, etc.) or a pressing operation (such as press-and-hold or short-press) for the effect template option may be received, and further an effect element corresponding to the selected effect template option acts on the to-be-processed image for displaying the to-be-processed image.

S130: receiving an element editing operation for the effect element added into the to-be-processed image, and adjusting display information of the effect element based on the element editing operation.

In this step, the element editing operation may be understood as an operation for editing the effect element to adjust the display information of the effect element. Exemplarily, the element editing operation may be an operation of deleting, substituting, adjusting, or hiding the effect element. The display information comprises at least one selected from the group of display color, display size, display angle, display status (such as static display or dynamic display), etc. Therefore, the element editing operation may also be an operation of adjusting the display color, display size, display angle and display status (such as static display or dynamic display) of the effect element.

Alternatively, receiving an element editing operation for the effect element added into the to-be-processed image specifically comprises: receiving an element editing operation acting on the effect element added into the to-be-processed image, so as to adjust the display information of the effect element; or, receiving a control triggering operation acting on a preset element adjusting control, so as to display an element adjusting area, wherein an element identifier for the added effect element is displayed in the element adjusting area, and thus the display information of the effect element is adjusted in response to an element adjusting operation input for the element identifier.

In the technical solution according to the embodiment of the present disclosure, by receiving an effect adding operation for a to-be-processed image, an effect classification interface is displayed and this effect classification interface displays effect type options that comprise effect template options, as a result of which users can be offered with selectable effect template options and also selection for different types of effects can be supported. Then, a selection operation for the effect template options is received and an effect element corresponding to the selected effect template option is added into the to-be-processed image; since effect templates support the combination of a plurality of effect elements, a preset effect element combination can be rapidly added through selection for effect templates, and both fast effect processing and reuse of effect templates are available. Finally, an element editing operation for the effect element added into the to-be-processed image is received, the display information of the effect element is adjusted based on the element editing operation, and it is viable to adjust any single effect element in the effect template. Therefore, such technical problems are addressed that effect props are relatively fixed and effects are displayed slightly inflexibly, effect processing can be performed in a more flexible way, users' personalized needs can be better satisfied, and users' experience in effect processing can be enhanced.

The technical solution according to the embodiment of the present disclosure is particularly applicable to mobile terminals. In response to an effect adding operation, an effect classification interface is displayed in order to offer effect type options to users, so information in which users are really interested can be displayed in a simple, direct, and effective way. Moreover, the mode of displaying the interface after triggering has lower requirements for the display size of terminals, and thus this technical solution is quite friendly to those mobile terminals having a limited display size. In addition, users can finish effect setting merely by the selection operation for the offered effect type options and can also intuitively observe the effects, and since complex underlying real-time effect processing is not required, better adaption to the computing power of mobile terminals can be achieved. At last, element editing operations for the displayed effect elements are also supported, thereby enabling users to create effects through easier and more entertaining brand-new interactions, further lowering the threshold for effect creation, and bringing in more special-effect-tool supporters.

To obtain more abundant effect elements available for effect creation, an effect element creating window, in addition to preset selectable effect elements, may be open to users and in this way, users' personalized needs of creating effects can be met. On the basis of any alternative technical solution according to the embodiment of the present disclosure, the effect processing method, alternatively, further comprises: receiving an effect element creating operation to generate a customized effect element; and generating an effect type option corresponding to the customized effect element, and adding the effect type option into the effect classification interface.

The effect element creating operation may be understood as an operation for creating a customized effect element based on user interaction. The customized effect element may be understood as an effect element associated with interactive behaviors of a user. The customized effect elements created by different users may be different.

In the embodiment of the present disclosure, there may be multiple ways of generating the customized effect element based on user operations. A variety of effect elements may be generated using different materials. Exemplarily, the receiving an effect element creating operation to generate a customized effect element may specifically comprise at least one operation selected from the group of:
receiving a material uploading operation, and generating a customized effect element based on uploaded materials;
receiving an image capturing operation, and generating a customized effect element based on captured images;
receiving a graphics drawing operation, and generating a customized effect element based on drawn graphics; and
receiving a text inputting operation, and generating a customized effect element based on input text information.

Among these operations, the material uploading operation may be understood as an operation for uploading materials for creating a customized effect element. Specifically, a preset material storage space may be displayed by triggering a preset material uploading control, wherein at least one material is stored in the material storage space, and further, in response to a selection operation acting on the materials, the selected materials are taken as the uploaded materials. Exemplarily, the materials may comprise images, videos, etc. Exemplarily, the material storage space may be a preset material storage space, an album in a user terminal, etc.

Alternatively, generating a customized effect element based on uploaded materials may specifically comprise segmenting the uploaded materials, acquiring segmentation objects of a preset type from the materials, and generating the customized effect element based on the segmentation objects, wherein the segmenting may be image matting and/or binarization processing, etc.

Among these operations, the image capturing operation may be understood as an operation for capturing images for creating a customized effect element. Specifically, by triggering a preset image capturing control, a capturing apparatus may be enabled and a preset capturing interface may be displayed, and further, images captured in the capturing interface are taken as the materials for creating a customized effect element.

Among these operations, the graphics drawing operation may be understood as an operation for acquiring graphics that are drawn by a user and used for creating a customized effect element. Specifically, a graphics drawing panel may be displayed by triggering a preset graphics drawing control, and further, in response to a graphics drawing operation acting on the graphics drawing panel, the drawn graphics are acquired and then taken as the materials for creating a customized effect element. Alternatively, acquiring the drawn graphics comprises: cropping, in response to an image acquisition triggering operation, a preset cropping area in the graphics drawing panel based on a preset cropping tool, and taking a cropped area as the drawn graphics. As shown in Fig. 1D, the size of the preset cropping area may also be adjusted according to user operations.

Among these operations, the text inputting operation may be understood as an operation for acquiring text information that is input by a user and used for creating a customized effect element. Specifically, a text inputting area may be displayed by triggering a preset text inputting control, and further, in response to a text editing operation acting on the text inputting area, the edited texts are taken as the text information for creating a customized effect element. The text editing operation may comprise, but not limited to, at least one selected from the group of a text typing operation, a text font size setting operation, a text color setting operation, a text style setting operation, etc.

To summarize, users are able to generate customized effect elements from a wide variety of materials, thus bringing more diversified effect elements. With this technical solution, personalized effect materials can be generated based on effect element creating operations, offering more possibilities to the selection of effect materials. Furthermore, users' personalized needs of effect creation can be met and users' experience in effect processing can be further improved.

Alternatively, the image of the customized effect element is taken as an identifier for an effect type option, and the effect type option corresponding to the customized effect element is generated. Further, the effect type option is added into the effect classification interface, which can facilitate subsequent reuse of the customized effect element by the user.

As an alternative technical solution according to the embodiment of the present disclosure, the effect processing method may further comprise: receiving a preview triggering operation for the to-be-processed image, and displaying an effect result of the effect element acting on the to-be-processed image.

The preview triggering operation may be generated based on a preset result previewing control. Specifically, upon reception of the preview triggering operation for the to-be-processed image, one or more effect elements added into the to-be-processed image are acquired, and the effect result of the added effect element(s) acting on the to-be-processed image is displayed. The advantage of such setting is that the display result of the created effect element can be previewed intuitively.

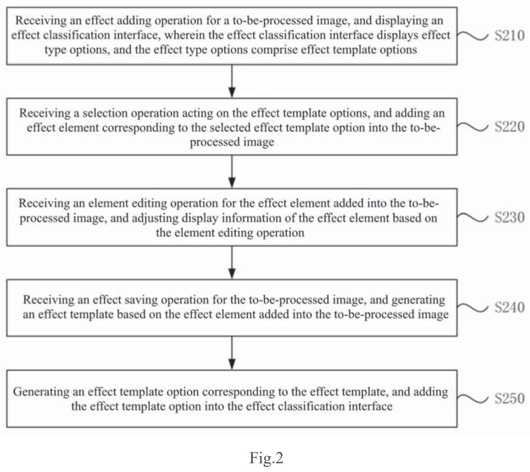

Fig. 2 is a schematic flowchart of another effect processing method according to the embodiment of the present disclosure. On the basis of the above embodiment, the technical solution according to this embodiment additionally introduces a technical feature of effect template generation. Alternatively, the effect processing method further comprises: receiving an effect saving operation for the to-be-processed image, and generating an effect template based on the effect element added into the to-be-processed image; and generating an effect template option corresponding to the effect template, and adding the effect template option into the effect classification interface. For specific implementation, reference may be made to the description of this embodiment. Technical features that are identical or similar to those in the previous embodiment are not recited here.

As shown in Fig. 2, the method in this embodiment may specifically comprise:
S210: receiving an effect adding operation for a to-be-processed image, and displaying an effect classification interface, wherein the effect classification interface displays effect type options, and the effect type options comprise effect template options.

S220: receiving a selection operation acting on the effect template options, and adding an effect element corresponding to the selected effect template option into the to-be-processed image.

S230: receiving an element editing operation for the effect element added into the to-be-processed image, and adjusting display information of the effect element based on the element editing operation.

S240: receiving an effect saving operation for the to-be-processed image, and generating an effect template based on the effect element added into the to-be-processed image.

In this step, the effect saving operation may be understood as an operation for integrating and saving the effect elements added into the to-be-processed image.

Alternatively, receiving an effect saving operation for the to-be-processed image specifically comprises: receiving a control triggering operation acting on a preset effect saving control. Further, the effect elements added into the to-be-processed image are acquired, and the effect template is generated based on the acquired effect elements. The effect saving control may be displayed on an interface in which the to-be-processed image is loaded. The advantage of such setting is that in a case where the effect elements added into the to-be-processed image are previewed, the effect template can be rapidly generated by triggering the effect saving control, facilitating user's interactive operations. Furthermore, generating the effect template may contribute to reuse of the same effect elements.

S250: generating an effect template option corresponding to the effect template, and adding the effect template option into the effect classification interface.

Alternatively, the effect template option corresponding to the effect template is generated based on an effect result in the effect template. Exemplarily, in the process of displaying the effect result in the effect template, an effect result image may be selected to generate the effect template option corresponding to the effect template; and the effect template option corresponding to the effect template may also be generated from materials uploaded by users or text information input by users. Further, by adding the effect template option into the effect classification interface, users can be provided with an entrance for reuse of the effect template, thereby facilitating their subsequent use of the saved effect template.

The technical solution according to the embodiment of the present disclosure enables saving of the edited effects, and can generate customized effect templates and add the effect template option corresponding to the effect template into the effect classification interface. Thus, users' subsequent reuse of the effect template is facilitated, the time for remaking the same props is saved, and the effect processing efficiency is increased.

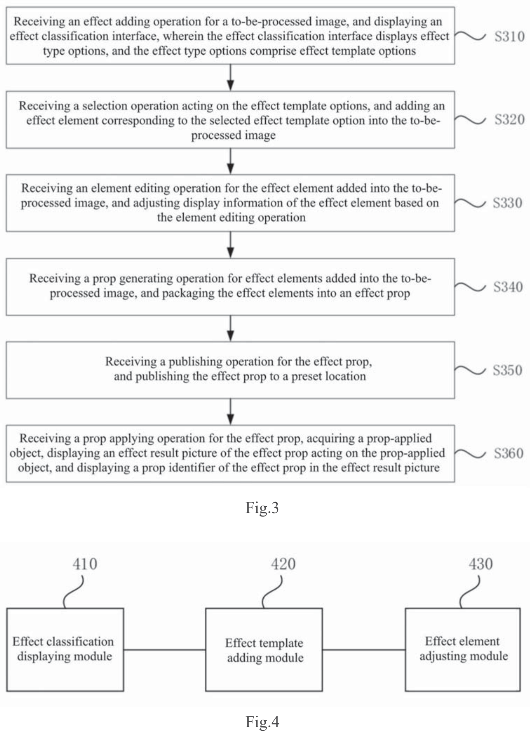

Fig. 3 is a schematic flowchart of yet another effect processing method according to the embodiment of the present disclosure. On the basis of the above embodiments, the technical solution according to this embodiment additionally introduces a technical feature of how to implement generation and application of effect props. Alternatively, a prop generating operation for the effect elements added into the to-be-processed image is received, and the effect elements is packaged into an effect prop; and a publishing operation for the effect prop is received, and the effect prop is published to a preset location. Further, on this basis, the effect processing method may also comprise: receiving a prop applying operation for the effect prop, acquiring a prop-applied object, displaying an effect result picture of the effect prop acting on the prop-applied object, and displaying a prop identifier of the effect prop in the effect result picture. For specific implementation, reference may be made to the description of this embodiment. Technical features that are identical or similar to those in the previous embodiments are not recited here.

As shown in Fig. 3, the method in this embodiment may specifically comprise:
S310: receiving an effect adding operation for a to-be-processed image, and displaying an effect classification interface, wherein the effect classification interface displays effect type options, and the effect type options comprise effect template options.
S320: receiving a selection operation acting on the effect template options, and adding an effect element corresponding to the selected effect template option into the to-be-processed image.
S330: receiving an element editing operation for the effect element added into the to-be-processed image, and adjusting display information of the effect element based on the element editing operation.
S340: receiving a prop generating operation for effect elements added into the to-be-processed image, and packaging the effect elements into an effect prop.

In this step, the prop generating operation may be understood as an operation that integrates and packages the added effect elements into the effect prop.

Specifically, a control triggering operation acting on a preset prop generating control may be received, effect elements added into the to-be-processed image may be acquired, and a display mode corresponding to the effect elements may be determined; further, an effect prop is generated based on the effect elements and the display mode corresponding to the effect elements. In the embodiment of the present disclosure, the effect elements may be packaged into the effect prop based on some open tools.

S350: receiving a publishing operation for the effect prop, and publishing the effect prop to a preset location.

In this step, the publishing operation for the effect prop may be understood as an operation that upon triggering, the effect prop is displayed to users other than the user who makes this effect prop. In another words, the publishing operation for the effect prop may be understood as a sharing operation for the effect prop. The preset location may be understood as a location that is preset to publish the effect prop. The preset location may be a publishing location that is preset in an application software making the effect prop, and may also be a publishing location that is preset in a third-party application.

Alternatively, receiving a publishing operation for the effect prop specifically comprises: receiving a control triggering operation acting on a preset publishing control, and displaying an application icon of an application in a terminal that can publish the effect prop; and receiving a selection operation for the application icon, and publishing the effect prop to a preset location in the application corresponding to the application icon.

S360: receiving a prop applying operation for the effect prop, acquiring a prop-applied object, displaying an effect result picture of the effect prop acting on the prop-applied object, and displaying a prop identifier of the effect prop in the effect result picture.

In this step, the prop applying operation may be understood as an operation for applying, upon triggering, the effect prop to the prop-applied object. The prop-applied object may be captured or uploaded materials, videos or the like.

Alternatively, receiving a prop applying operation for the effect prop comprises: receiving a prop triggering operation acting on the effect prop, and displaying an object acquiring interface for acquiring the prop-applied object, wherein the object acquiring interface may be a capturing interface, and then the object captured in the capturing interface is taken as the prop-applied object. Further, an object uploading control is displayed on the capturing interface. A control triggering operation acting on the object uploading control is received and the uploaded materials or videos are taken as the prop-applied object.

In the embodiment of the present disclosure, the prop identifier may be a quick entrance for access to the effect prop. Alternatively, an effect applying interface is displayed in response to an identifier triggering operation for the prop identifier of the effect prop. The effect applying interface may display a picture or a video to which the effect prop is applied, and may also display a prop applying control that utilizes the effect prop, such as "Capture in Same Style", etc.

The technical solution according to the embodiment of the present disclosure enables users to publish effects as well as self-made personalized effect props, and also supports application of the effect prop. As a result, the style of effect props is enriched, more effect options are offered to users, user's participation and interaction are improved, effect processing becomes more enjoyable, and diversified results of effect display are attained. In addition, this technical solution, when applied in a mobile terminal, also enables interworking with other applications in this mobile terminal, introducing more effect processing scenarios to users.

Fig. 4 is a structural schematic diagram of an effect processing apparatus according to the embodiment of the present disclosure. This apparatus may be implemented in software and/or hardware. As shown in Fig. 4, the apparatus comprises: an effect classification displaying module 410, an effect template adding module 420, and an effect element adjusting module 430.

Among these modules, the effect classification displaying module 410 is configured to receive an effect adding operation for a to-be-processed image, and display an effect classification interface, wherein the effect classification interface displays effect type options, and the effect type options comprise effect template options; the effect template adding module 420 is configured to receive a selection operation acting on the effect template option, and add an effect element corresponding to the selected effect template option into the to-be-processed image; and the effect element adjusting module 430 is configured to receive an element editing operation for the effect element added into the to-be-processed image, and adjust display information of the effect element based on the element editing operation.

In the technical solution according to the embodiment of the present disclosure, an effect adding operation for a to-be-processed image is received, an effect classification interface is displayed, the effect classification interface displays effect type options, and the effect type options comprise effect template options, so selectable effect template options are offered to users, so as to support selection for different types of effects. Then, a selection operation acting on the effect template option is received and an effect element corresponding to the selected effect template option is added into the to-be-processed image; since combinations of a plurality of effect elements are supported in the effect template, preset effect element combinations may be rapidly added through selection for the effect template, reuse of the effect template is enabled, and a fast effect processing can be achieved. Finally, an element editing operation for the effect element added into the to-be-processed image is received and display information of the effect element is adjusted based on the element editing operation; by doing so, it is viable to adjust any single effect element in the effect template, such technical problems are addressed that the displaying results of effects are single and stiff due to the relatively fixed effect props, the effect processing can be performed in a more flexible way, users' personalized needs can be better satisfied, and users' experience in effect processing can be enhanced.

On the basis of the above alternative technical solutions, alternatively, the effect processing apparatus further comprises: an effect template generating module and a template option adding module, wherein the effect template generating module is configured to receive an effect saving operation for the to-be-processed image, and generate an effect template based on the effect element added into the to-be-processed image; and the template option adding module is configured to generate an effect template option corresponding to the effect template, and add the effect template option into the effect classification interface.

On the basis of the above alternative technical solutions, alternatively, the effect type options further comprise effect element options. Accordingly, the effect processing apparatus further comprises an effect element displaying module and an effect element adding module, wherein the effect element displaying module is configured to receive a selection operation for the effect element options, and display at least one of the effect elements corresponding to the effect element options; and the effect element adding module is configured to receive a selection operation for the effect element, and add the selected effect element into the to-be-processed image.

On the basis of the above alternative technical solutions, alternatively, the effect element options comprise at least one selected from the group of a filter option, a makeup option, a hair dying option, an area segmentation option, a deformation option for a first preset object, an option of associated display following the second preset object, a foreground sticker option, and a background image option.

On the basis of the above alternative technical solutions, alternatively, the effect processing apparatus further comprises a customized effect generating module and a customized effect adding module, wherein the customized effect generating module is configured to receive an effect element creating operation to generate a customized effect element; and the customized effect adding module is configured to generate an effect type option corresponding to the customized effect element, and add the effect type option into the effect classification interface.

On the basis of the above alternative technical solutions, alternatively, the customized effect generating module is configured to execute at least one operation selected from the group of:
receiving a material uploading operation, and generating a customized effect element based on uploaded materials;
receiving an image capturing operation, and generating a customized effect element based on captured images;
receiving a graphics drawing operation, and generating a customized effect element based on drawn graphics; and
receiving a text inputting operation, and generating a customized effect element based on input text information.

On the basis of the above alternative technical solutions, alternatively, the effect processing apparatus further comprises:
an effect result displaying module configured to receive a preview triggering operation for the to-be-processed image, and display an effect result of the effect element acting on the to-be-processed image.

On the basis of the above alternative technical solutions, alternatively, the effect processing apparatus further comprises:
an effect prop packaging module configured to receive a prop generating operation for the effect elements added into the to-be-processed image, and package the effect elements into an effect prop; and
an effect prop publishing module configured to receive a publishing operation for the effect prop, and publish the effect prop to a preset location.

On the basis of the above alternative technical solutions, alternatively, the effect processing apparatus further comprises:
an effect prop applying module configured to receive a prop applying operation for the effect prop, acquire a prop-applied object, display an effect result picture of the effect prop acting on the prop-applied object, and display a prop identifier of the effect prop in the effect result picture.

The effect processing apparatus according to the embodiment of the present disclosure may execute the effect processing method according to any embodiment of the present disclosure, and has functional modules and advantageous effects that correspond to execution of the effect processing method.

It is noticeable that various units and modules included in the above apparatus are merely divided in terms of functional logic, but are not limited to the above division, as long as corresponding functions can be realized. In addition, the specific names of various functional units are only for ease of distinguishing them from each other and are not intended to limit the scope of the embodiments of the present disclosure.

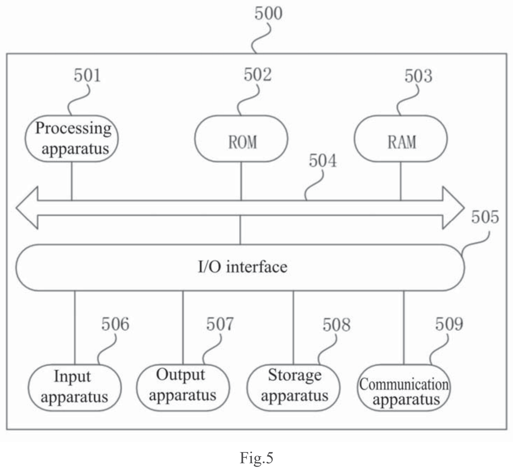

Fig. 5 is a structural schematic diagram of an electronic device according to the embodiment of the present disclosure. Referring to FIG. 5, FIG. 5 illustrates a schematic structural diagram of an electronic device 500 (e.g., the terminal device or server in FIG.5) suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a tablet computer (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 5 is merely an example, and should not pose any limitation to the functions and the range of use of the embodiments of the present disclosure.

As illustrated in FIG. 5, the electronic device 500 may include a processing apparatus 501 (e.g., a central processing unit, a graphics processing unit, etc.), which can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While FIG. 5 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. **In** such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: receive an effect adding operation for a to-be-processed image, and display an effect classification interface, wherein the effect classification interface displays an effect type option, and the effect type option comprises an effect template option; receive a selection operation acting on the effect template option, and add an effect element corresponding to the selected effect template option into the to-be-processed image; and receive an element editing operation for the effect element added into the to-be-processed image, and adjust display information of the effect element based on the element editing operation.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. **In** the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the unit does not constitute a limitation of the unit itself under certain circumstances. For example, the first acquisition unit can also be described as "a unit that acquires at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, Example 1 provides an effect processing method, comprising:
receiving an effect adding operation for a to-be-processed image, and displaying an effect classification interface, wherein the effect classification interface displays an effect type option, and the effect type option comprises an effect template option;
receiving a selection operation acting on the effect template option, and adding an effect element corresponding to the selected effect template option into the to-be-processed image; and
receiving an element editing operation for the effect element added into the to-be-processed image, and adjusting display information of the effect element based on the element editing operation.

According to one or more embodiments of the present disclosure, Example 2 provides the method of Example 1, further comprising:
alternatively, receiving an effect saving operation for the to-be-processed image, and generating an effect template based on the effect element added into the to-be-processed image; and
generating an effect template option corresponding to the effect template, and adding the effect template option into the effect classification interface.

According to one or more embodiments of the present disclosure, Example 3 provides the method of Example 1, the method further comprises:
alternatively, receiving a selection operation for the effect element option, and displaying at least one of the effect elements corresponding to the effect element option; and
receiving a selection operation for the effect elements, and adding the selected effect element into the to-be-processed image.

According to one or more embodiments of the present disclosure, Example 4 provides the method of Example 3, further comprising:
alternatively, the effect element option comprises at least one selected from the group of a filter option, a makeup option, a hair dying option, an area segmentation option, a deformation option for a first preset object, an option of associated display following a second preset object, a foreground sticker option, and a background image option.

According to one or more embodiments of the present disclosure, Example 5 provides the method of Example 1, further comprising:
alternatively, receiving an effect element creating operation to generate a customized effect element; and
generating an effect type option corresponding to the customized effect element, and adding the effect type option into the effect classification interface.

According to one or more embodiments of the present disclosure, Example 6 provides the method of Example 1, further comprising:
alternatively, the receiving an effect element creating operation to generate a customized effect element comprises at least one operation selected from the group of:
receiving a material uploading operation, and generating a customized effect element based on uploaded materials;
receiving an image capturing operation, and generating a customized effect element based on captured images;
receiving a graphics drawing operation, and generating a customized effect element based on drawn graphics; and
receiving a text inputting operation, and generating a customized effect element based on input text information.

According to one or more embodiments of the present disclosure, Example 7 provides the method of Example 1, further comprising:
alternatively, receiving a preview triggering operation for the to-be-processed image, and displaying an effect result of the effect element acting on the to-be-processed image.

According to one or more embodiments of the present disclosure, Example 8 provides the method of Example 1, further comprising:
alternatively, receiving a prop generating operation for effect elements added into the to-be-processed image, and packaging the effect elements into an effect prop; and
receiving a publishing operation for the effect prop, and publishing the effect prop to a preset location.

According to one or more embodiments of the present disclosure, Example 9 provides the method of Example 8, further comprising:
alternatively, receiving a prop applying operation for the effect prop, acquiring a prop-applied object, displaying an effect result picture of the effect prop acting on the prop-applied object, and displaying a prop identifier of the effect prop in the effect result picture.

According to one or more embodiments of the present disclosure, Example 10 provides an effect processing apparatus, comprising:
an effect classification displaying module configured to receive an effect adding operation for a to-be-processed image, and display an effect classification interface, wherein the effect classification interface displays an effect type option, and the effect type option comprises an effect template option;
an effect template adding module configured to receive a selection operation acting on the effect template option, and add an effect element corresponding to the selected effect template option into the to-be-processed image; and
an effect element adjusting module configured to receive an element editing operation for the effect element added into the to-be-processed image, and adjust display information of the effect element based on the element editing operation.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An effect processing method, comprising:
receiving an effect adding operation for a to-be-processed image, and displaying an effect classification interface, the effect classification interface displays an effect type option, and the effect type option comprise an effect template option;
receiving a selection operation acting on the effect template option, and adding an effect element corresponding to the selected effect template option into the to-be-processed image; and
receiving an element editing operation for the effect element added into the to-be-processed image, and adjusting display information of the effect element based on the element editing operation.

2. The effect processing method according to claim 1, further comprising:
receiving an effect saving operation for the to-be-processed image, and generating an effect template based on the effect element added into the to-be-processed image; and
generating an effect template option corresponding to the effect template, and adding the effect template option into the effect classification interface.

3. The effect processing method according to claim 1 or 2, wherein the effect type option further comprises effect element option; the method further comprises:
receiving a selection operation for the effect element option, and displaying at least one of the effect elements corresponding to the effect element option; and
receiving a selection operation for the effect elements, and adding the selected effect element into the to-be-processed image.

4. The effect processing method according to claim 3, wherein the effect element option comprises at least one selected from the group of a filter option, a makeup option, a hair dying option, an area segmentation option, a deformation option for a first preset object, an option of associated display following a second preset object, a foreground sticker option, and a background image option.

5. The effect processing method according to claim 1, further comprising:
receiving an effect element creating operation to generate a customized effect element; and
generating an effect type option corresponding to the customized effect element, and adding the effect type option into the effect classification interface.

6. The effect processing method according to claim 5, wherein the receiving an effect element creating operation to generate a customized effect element comprises at least one operation selected from the group of:
receiving a material uploading operation, and generating a customized effect element based on uploaded materials;
receiving an image capturing operation, and generating a customized effect element based on captured images;
receiving a graphics drawing operation, and generating a customized effect element based on drawn graphics; and
receiving a text inputting operation, and generating a customized effect element based on input text information.

7. The effect processing method according to any of claims 1 to 6, further comprising:
receiving a preview triggering operation for the to-be-processed image, and displaying an effect result of the effect element acting on the to-be-processed image.

8. The effect processing method according to any of claims 1 to 7, further comprising:
receiving a prop generating operation for the effect element added into the to-be-processed image, and packaging the effect element into an effect prop; and
receiving a publishing operation for the effect prop, and publishing the effect prop to a preset location.

9. The effect processing method according to claim 8, further comprising:
receiving a prop applying operation for the effect prop, acquiring a prop-applied object, displaying an effect result picture of the effect prop acting on the prop-applied object, and displaying a prop identifier of the effect prop in the effect result picture.

10. An effect processing apparatus, comprising:
an effect classification displaying module configured to receive an effect adding operation for a to-be-processed image, and display an effect classification interface, wherein the effect classification interface displays an effect type option, and the effect type option comprise an effect template option;
an effect template adding module configured to receive a selection operation acting on the effect template option, and add an effect element corresponding to the selected effect template option into the to-be-processed image; and
an effect element adjusting module configured to receive an element editing operation for the effect element added into the to-be-processed image, and adjust display information of the effect element based on the element editing operation.

11. The effect processing apparatus according to claim 10, further comprising:
an effect template generating module configured to receive an effect saving operation for the to-be-processed image, and generate an effect template based on the effect element added into the to-be-processed image; and
a template option adding module configured to generate an effect template option corresponding to the effect template, and add the effect template option into the effect classification interface.

12. The effect processing apparatus according to claim 10 or 11, wherein the effect type option further comprises effect element option; the effect processing apparatus further comprises:
an effect element displaying module configured to receive a selection operation for the effect element option, and display at least one of the effect elements corresponding to the effect element option; and
an effect element adding module configured to receive a selection operation for the effect elements, and add the selected effect element into the to-be-processed image.

13. The effect processing apparatus according to claim 12, wherein the effect element option comprises at least one selected from the group of a filter option, a makeup option, a hair dying option, an area segmentation option, a deformation option for a first preset object, an option of associated display following a second preset object, a foreground sticker option, and a background image option.

14. The effect processing apparatus according to any of claims 10 to 13, further comprising:
a customized effect generating module configured to receive an effect element creating operation to generate a customized effect element; and
a customized effect adding module configured to generate an effect type option corresponding to the customized effect element, and add the effect type option into the effect classification interface.

15. The effect processing apparatus according to claim **14,** wherein the customized effect generating module is configured to execute at least one operation selected from the group of:
receiving a material uploading operation, and generating a customized effect element based on uploaded materials;
receiving an image capturing operation, and generating a customized effect element based on captured images;
receiving a graphics drawing operation, and generating a customized effect element based on drawn graphics; and
receiving a text inputting operation, and generating a customized effect element based on input text information.

16. The effect processing apparatus according to any of claims 10 to 15, further comprising:
an effect result displaying module configured to receive a preview triggering operation for the to-be-processed image, and display an effect result of the effect element acting on the to-be-processed image.

17. The effect processing apparatus according to any of claims 10 to 16, further comprising:
an effect prop packaging module configured to receive a prop generating operation for the effect element added into the to-be-processed image, and package the effect element into an effect prop; and
an effect prop publishing module configured to receive a publishing operation for the effect prop, and publish the effect prop to a preset location.

18. The effect processing apparatus according to any of claims 10 to 17, further comprising:
an effect prop applying module configured to receive a prop applying operation for the effect prop, acquire a prop-applied object, display an effect result picture of the effect prop acting on the prop-applied object, and display a prop identifier of the effect prop in the effect result picture.

19. An electronic device, comprising:
one or more processors; and
a memory configured to store one or more programs,
wherein, when the one or more programs are executed by the one or more processors, the one or more processors implement the effect processing method according to any of claims 1 to 9.

20. A storage medium containing computer-executable instructions, the computer-executable instructions, when executed by a computer processor, being used to execute the effect processing method according to any of claims 1 to 9.
